# EUROPEAN PATENT APPLICATION

(11) **EP 4 685 623 A1**
(43) Date of publication of application: **28.01.2026**
(21) Application number: 24774105.1
(22) Date of filing: 19.03.2024
(51) Int. Cl.: G06F 3/0484

(54) **INTERACTION METHOD AND APPARATUS, DEVICE AND STORAGE MEDIUM**

(30) Priority: 21.03.2023 CN 202310280731
(71) Applicant: Beijing Zitiao Network Technology Co., Ltd., Beijing 100190 (CN)
(72) Inventor: LIU, Fujia, Beijing 100028 (CN); WANG, Ruifeng, Beijing 100028 (CN); WANG, Xingyi, Beijing 100028 (CN)
(74) Representative: Marks & Clerk LLP
(86) International application number: PCT/CN2024/082443
(87) International publication number: WO 2024/193540

(57) **Abstract**

Embodiments of the present disclosure disclose an interaction method, and apparatus, a device and a storage medium. The method comprises: in response to receiving a screenshot operation on a media content display page, determining (101) a corresponding preset screenshot scenario and at least one corresponding screenshot picture; displaying (102) a preset control; and in response to a trigger operation on the preset control, generating (103) target media content corresponding to the preset scenario based on the preset screenshot scenario and the at least one screenshot picture.

## Description

This application claims priority to Chinese Patent Application No. 202310280731.5, entitled "INTERACTION METHOD AND APPARATUS, DEVICE, AND STORAGE MEDIUM" filed with the China National Intellectual Property Administration on March 21, 2023, which is incorporated by reference in its entirety.

### FIELD

Embodiments of the present disclosure relate to the field of computer technology, and in particular, to an interaction method and apparatus, a device, and a storage medium.

### BACKGROUND

With the continuous development of Internet technology, users may browse a wide variety of multimedia content through the Internet, and different users may share their works with each other by publishing media content such as videos or pictures.

### SUMMARY

Embodiments of the present disclosure provide an interaction method, an apparatus, a storage medium, and a device.

In a first aspect, an embodiment of the present disclosure provides an interaction method, including:
determining, in response to receiving a screenshot operation on a media content display page, a current corresponding preset screenshot scenario and at least one corresponding screenshot picture;
displaying a preset control; and
generating, in response to a trigger operation on the preset control, target media content corresponding to the preset screenshot scenario based on the preset screenshot scenario and the at least one screenshot picture.

In a second aspect, an embodiment of the present disclosure further provides an interaction apparatus, including:
a screenshot scenario determination module, configured to determine, in response to receiving a screenshot operation on a media content display page, a current corresponding preset screenshot scenario and at least one corresponding screenshot picture;
a preset control display module, configured to display a preset control; and
a media content generation module, configured to generate, in response to a trigger operation on the preset control, target media content corresponding to the preset screenshot scenario based on the preset screenshot scenario and the at least one screenshot picture.

In a third aspect, an embodiment of the present disclosure further provides an electronic device. The electronic device includes:
one or more processors; and
a storage apparatus, configured to store one or more programs, where
the one or more programs, when executed by the one or more processors, cause the one or more processors to implement the interaction method according to the embodiments of the present disclosure.

In a fourth aspect, an embodiment of the present disclosure further provides a storage medium including computer-executable instructions. The computer-executable instructions, when executed by a computer processor, are used to perform the interaction method according to the embodiments of the present disclosure.

According to the technical solutions according to embodiments of the present disclosure, in response to receiving a screenshot operation on the media content display page, a corresponding preset screenshot scenario and at least one corresponding screenshot picture are determined, a preset control is displayed, and in response to a trigger operation on the preset control, target media content corresponding to the preset screenshot scenario is generated based on the preset screenshot scenario and the at least one screenshot picture.

### BRIEF DESCRIPTION OF THE DRAWINGS

The above and other features, advantages, and aspects of various embodiments of the present disclosure will become more apparent with reference to the accompanying drawings and the following specific implementations. Throughout the accompanying drawings, the same or similar reference numerals denote the same or similar elements. It should be understood that the accompanying drawings are illustrative, and components and elements may not necessarily be drawn to scale.
FIG. 1 is a schematic flowchart of an interaction method according to an embodiment of the present disclosure;
FIG. 2 is a schematic diagram of an interface interaction according to an embodiment of the present disclosure;
FIG. 3 is a schematic diagram of another interface interaction according to an embodiment of the present disclosure;
FIG. 4 is a schematic diagram of another interface interaction according to an embodiment of the present disclosure;
FIG. 5 is a schematic flowchart of an interaction method according to an embodiment of the present disclosure;
FIG. 6 is a schematic diagram of another interface interaction according to an embodiment of the present disclosure;
FIG. 7 is a schematic diagram of a structure of an interaction apparatus according to an embodiment of the present disclosure; and
FIG. 8 is a schematic diagram of a structure of an electronic device according to an embodiment of the present disclosure.

### DETAILED DESCRIPTION OF EMBODIMENTS

The embodiments of the present disclosure will be described in more detail below with reference to the accompanying drawings. Although the accompanying drawings show some embodiments of the present disclosure, it should be understood that the present disclosure may be implemented in various forms, and should not be construed as being limited to the embodiments stated herein. On the contrary, these embodiments are provided for a more thorough and complete understanding of the present disclosure. It should be understood that the accompanying drawings and the embodiments of the present disclosure are for exemplary purposes only, and are not intended to limit the scope of protection of the present disclosure.

It should be understood that the steps recorded in the method implementations of the present disclosure may be performed in different orders and/or in parallel. In addition, additional steps may be included and/or the execution of the illustrated steps may be omitted in the method implementations. The scope of the present disclosure is not limited in this aspect.

The term "including" used herein and variations thereof are open-ended inclusions, namely "including but not limited to." The term "based on" is interpreted as "at least partially based on." The term "an embodiment" means "at least one embodiment"; the term "another embodiment" means "at least one additional embodiment"; and the term "some embodiments" means "at least some embodiments". Related definitions of other terms will be given in the description below.

It should be noted that concepts such as "first" and "second" mentioned in the present disclosure are only used to distinguish different apparatuses, modules, or units, and are not used to limit the order or relation of interdependence of functions performed by these apparatuses, modules, or units.

It should be noted that the modifiers "a" and "a plurality of" mentioned in the present disclosure are illustrative and not limiting, and those skilled in the art should understand that unless otherwise explicitly specified in the context, the modifiers should be understood as "one or more".

The names of messages or information exchanged between a plurality of apparatuses in the implementations of the present disclosure are used for illustrative purposes only, and are not used to limit the scope of these messages or information.

It should be understood that before the use of the technical solutions disclosed in the embodiments of the present disclosure, a user shall be informed of the type, range of use, use scenarios, etc., of personal information involved in the present disclosure in an appropriate manner in accordance with relevant laws and regulations, and the authorization of the user shall be obtained.

For example, in response to reception of an active request from the user, a prompt message is sent to the user to clearly inform the user that the requested operation will require access to and use of the personal information of the user. As such, the user may independently choose, according to the prompt message, whether to provide the personal information to software or hardware, such as an electronic device, an application, a server, or a storage medium, that performs the operations of the technical solutions of the present disclosure.

As an optional but non-limiting implementation, in response to the reception of the active request from the user, the method for sending the prompt message to the user may be, for example, a pop-up window, in which the prompt message may be presented in text. Further, the pop-up window may also carry a selection control for the user to choose whether to "agree" or "disagree" to provide the personal information to the electronic device.

It should be understood that the above notification and user authorization obtaining process is only illustrative, which does not limit the implementations of the present disclosure, and other methods that comply with the relevant laws and regulations may also be applied to the implementations of the present disclosure.

It should be understood that data (including but not limited to the data itself, and data acquisition, or usage) involved in the technical solutions should comply with the requirements of corresponding laws and regulations, and relevant stipulations.

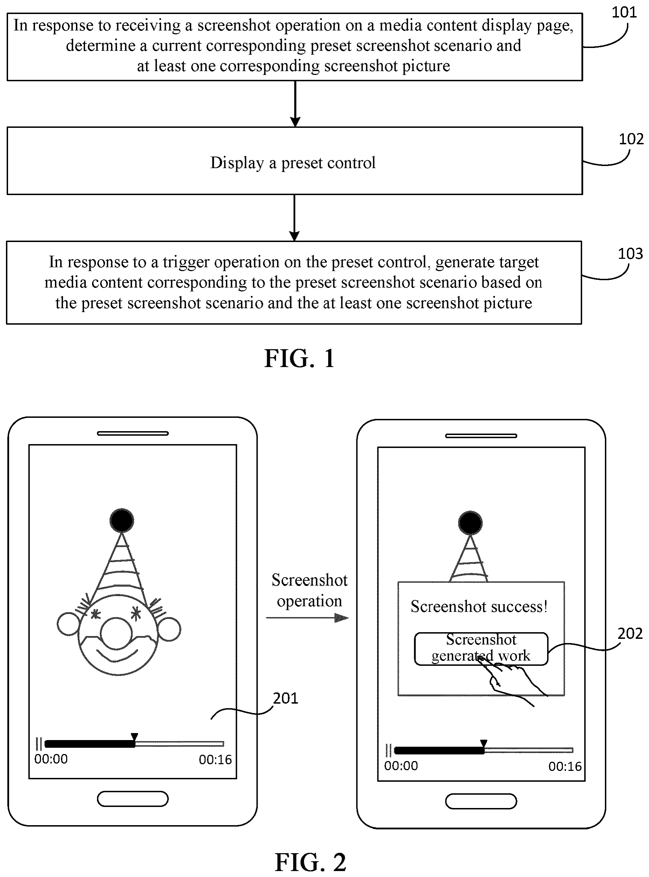

FIG. 1 is a schematic flowchart of an interaction method according to an embodiment of the present disclosure. This embodiment of the present disclosure is applicable to a scenario of interaction. The method may be performed by an interaction apparatus. The apparatus may be implemented in a form of software and/or hardware, and is optionally implemented through an electronic device. The electronic device may be a mobile terminal such as a mobile phone, a smart watch, a tablet personal computer, and a personal digital assistant, or may also be a device such as a personal computer (PC) terminal or a server.

As shown in FIG. 1, the method includes:
Step 101: determine, in response to receiving a screenshot operation on a media content display page, a current corresponding preset screenshot scenario and at least one corresponding screenshot picture.

In this embodiment of the present disclosure, the media content display page may be a page in a preset application, and the preset application has a function of publishing media content. The media content display page is used to display preset media content and/or preset information associated with the preset media content. Exemplarily, the preset media content may be a single piece of media content in a media content stream, and the user may switch, through a switching operation, pieces of the media content in the media content stream on the media content display page. An input method for the screenshot operation is not limited, such as triggering a screenshot control on an application page of the preset application, inputting a screenshot gesture within the preset application, or triggering a physical button or a virtual button of the electronic device through methods such as pressing.

Exemplarily, a screenshot scenario where a preset control needs to be displayed may be preset, and is referred to as a preset screenshot scenario. The preset screenshot scenario may be set by the preset application according to configuration information, or may also be set by the user according to requirements. Optionally, the preset screenshot scenario may be set based on preset scenario factors. The preset scenario factors may include, for example, one or more of the type of a current page displayed within the preset application, content displayed on the current page of the preset application, a current time period, and environmental information of the environment where the electronic device is located.

Optionally, the preset screenshot scenario includes: the media content display page including preset information associated with preset media content, and/or media content display page currently displaying the preset media content. Therefore, the quantity of information in the screenshot is enriched, and the requirements of the user for generating and publishing media content works are satisfied.

Exemplarily, the preset media content may be media content published by the user (which may be a current user, or a user other than the current user) through the preset application, or may also be media content published by a platform to which the preset application belongs. A specific form of the preset media content is not limited, which may be image content or video content, and specifically, may be a picture work, an image-text work, a video work, a live stream, news, or the like.

Exemplarily, the preset information associated with the preset media content may be, for example, comment information or cover information of the preset media content. Taking the comment information as an example, the media content display page includes preset information associated with the preset media content. Specifically, the media content display page may include a comment area (which may also be referred to as a comment panel) of the preset media content, and at least one piece of comment information is displayed in the comment area.

Exemplarily, at least one screenshot picture corresponding to the screenshot operation may include: a screen image displayed on a screen of the electronic device when the screenshot operation is received, a page image displayed in the preset application when the screenshot operation is received, or a screenshot picture corresponding to a historical screenshot operation associated with the screenshot operation.

Step 102: display the preset control.

In this embodiment of the present disclosure, a specific type of the preset control is not limited, which may be, for example, a floating control or a button control.

Step 103: generate, in response to a trigger operation on the preset control, target media content corresponding to the preset screenshot scenario based on the preset screenshot scenario and the at least one screenshot picture.

Exemplarily, different preset screenshot scenarios may correspond to different ways for generating the target media content. For example, in a preset screenshot scenario, the screenshot picture may be required to be cropped, while in another preset screenshot scenario, there may be no need to crop the screenshot picture. The target media content generated based on the at least one screenshot picture may include all or part of information in the at least one screenshot picture. Information such as audio information, background image information etc., may also be added on the basis of the screenshot picture. It should be understood that the information added on the basis of the screenshot picture may be obtained based on the preset media content and the preset information associated with the preset media content.

Optionally, the target media content includes image-text works and/or video works. Therefore, the type of the media content generated based on the screenshot picture may be enriched.

Optionally, the step of generating, in response to a trigger operation on the preset control, target media content corresponding to the preset screenshot scenario based on the preset screenshot scenario and the at least one screenshot picture may include: generating, in response to the trigger operation on the preset control, the target media content corresponding to the preset screenshot scenario based on the preset screenshot scenario and the at least one screenshot picture, and publishing the target media content. Therefore, the efficiency of publishing the target media content may be improved. Target media content corresponding to the preset screenshot scenario may be generated based on an associated image of the screenshot picture. Optionally, publishing target media content may be specifically publishing target media content within the preset application. Optionally, generating the target media content and generating and publishing the target media content may correspond to different trigger operations. For example, a first trigger operation is used to trigger generation of the target media content, while a second trigger operation is used to trigger generation and publication of the target media content. Exemplarily, the first trigger operation is a tap, and the second trigger operation is long press. For another example, there may be two preset controls, one is used to input the first trigger operation, and the other one is used to input the second trigger operation.

FIG. 2 is a schematic diagram of an interface interaction according to an embodiment of the present disclosure. A screenshot operation is received on a media content display page 201. The media content display page 201 is currently displaying preset media content, such as a clown video in the Fig. 2. A current corresponding preset screenshot scenario is determined as currently displaying the preset media content and a corresponding screenshot picture. A preset control 202 is displayed. After the user triggers the preset control 202, if a current trigger operation is a first trigger operation, target media content corresponding to the preset screenshot scenario may be generated based on the preset screenshot scenario and the screenshot picture. If the current trigger operation is a second trigger operation, the target media content may be directly generated based on the screenshot picture and be published, thereby improving the efficiency of publishing the target media content.

According to the interface interaction method in this embodiment of the present disclosure, in response to receiving a screenshot operation on a media content display page, a corresponding preset screenshot scenario and at least one corresponding screenshot picture are determined, a preset control is displayed, and in response to a trigger operation on the preset control, the target media content corresponding to the preset screenshot scenario is generated based on the preset screenshot scenario and the at least one screenshot picture. By employing the above technical solutions, after receiving the screenshot operation on the media content display page, the preset control is displayed, and by triggering the preset control, the target media content corresponding to the preset screenshot scenario may be generated based on the preset screenshot scenario and the at least one screenshot picture. The convenience for a user to generate the media content through screenshots in a preset screenshot scenario is improved, and user experience is enhanced.

In some embodiments, the step of displaying the preset control may include: associatively displaying the preset control and the associated image of the screenshot picture. Therefore, the user may be allowed to preview relevant image information of the screenshot picture, to provide a reference for the user to determine whether to trigger the preset control, thereby enhancing user experience.

A specific method for associatively displaying is not limited. For example, a distance between a display position of the preset control and a display position of the associated image of the screenshot picture may be less than a preset distance threshold, or the preset control and the associated image of the screenshot picture are included in the same control or the same subpage. Optionally, the preset control is displayed below the associated image. The associated image of the screenshot picture may be an associated image of some or all screenshots of the at least one screenshot picture.

Exemplarily, the associated image of the screenshot picture may include a thumbnail of the screenshot picture, or may include preview media content generated based on the screenshot picture, such as a preview image generated based on the screenshot picture and the preset screenshot scenario. Therefore, the user is facilitated to preview an effect of media content to be generated or to be published.

In some embodiments, after associatively displaying the preset control and the associated image of the screenshot picture, the step of generating, in response to a trigger operation on the preset control, target media content corresponding to the preset screenshot scenario based on the preset screenshot scenario and the at least one screenshot picture may include: generating, in response to the trigger operation on the preset control, the target media content corresponding to the preset screenshot scenario based on the associated image of the screenshot picture, and publishing the target media content. Therefore, the user is aware of an effect of the media content to be published in advance after intuitively viewing the associated image of the screenshot picture, and the user may rapidly publish the target media content by triggering the preset control.

In some embodiments, the step of generating, in response to a trigger operation on the preset control, target media content corresponding to the preset screenshot scenario based on the preset screenshot scenario and the at least one screenshot picture may include: entering an editing page in response to the trigger operation on the preset control; displaying preview media content generated based on the associated image of the screenshot picture on the editing page; and generating, in response to an editing operation on the preview media content, the target media content corresponding to the preset screenshot scenario based on the editing operation. Therefore, after triggering the preset control, the editing page is entered. The preview media content is displayed on the editing page, to allow the user to perform further editing based on the preview media content, thereby satisfying requirements of the user for editing works. The editing operation may include, for example, adding a text, drawing shapes, overlaying pictures, adding music, or adjusting a positions, a size, etc., of the associated image of the screenshot picture. For example, for comment information, the user may mark a target comment entry by drawing a shape such as a rectangular box or a circle.

In some embodiments, before displaying an associated image of the screenshot picture, the method may further include: performing first preset processing on the screenshot picture to obtain the associated image of the screenshot picture. Therefore, the screenshot picture may be automatically preprocessed based on the preset screenshot scenario, making it more suitable for generating media content, so that the associated image viewed by the user is closer to the target media content.

In some embodiments, the step of generating, in response to a trigger operation on the preset control, target media content corresponding to the preset screenshot scenario based on the preset screenshot scenario and the at least one screenshot picture may include: performing, in response to a preset trigger operation on the preset control, second preset processing on the at least one screenshot picture based on the preset screenshot scenario, and generating the target media content corresponding to the preset screenshot scenario based on a processing result of the second preset processing. The screenshot picture involved in the second preset processing may include some or all of the at least one screenshot picture.

Optionally, the first preset processing and/or the second preset processing may include at least one of cropping processing, scaling processing, and target information addition processing. The first preset processing and the second preset processing may be the same or different, and namely, may include the same or different items from the above items. For example, the first preset processing may include the cropping processing, and the second preset processing may include the scaling processing. For convenience in describing the specific content of the above items, the above items are collectively referred to as preset processing hereinafter.

In some embodiments, the preset processing may include cropping out a target area in a screenshot picture. The target area may be an area including a preset interaction control. The preset interaction control is typically used by a user to perform a human-machine interaction or interact with another user. Media content to be published that includes less information may be removed. Exemplarily, the preset screenshot scenario may include: a current page of the preset application including preset information associated with preset media content. The preset information may include comment information. Namely, when the user performs a screenshot operation on a comment area of a media content work, a step of cropping out a target area in a screenshot picture may include: cropping out an input area for comment information in the screenshot picture.

In some embodiments, the preset processing may include: performing scaling down processing on the screenshot picture based on a preset proportion. A specific value of the preset proportion is not limited, such as 80%. Exemplarily, the media content display page of the preset application may typically include a set interaction control, such as a like control, a favorite control, or a share control, and may also include display information such as title information. The set interaction control, the display information, etc. are typically located at a top, a bottom, or left-right sides of a page. By performing scaling down processing on the screenshot picture, image content in the screenshot picture may avoid the set interaction control and the display information as described above when the target media content is displayed, thereby facilitating the user to view the image content in the screenshot picture.

In some embodiments, the preset processing may include: adding target information on the basis of the screenshot picture. The target information may be, for example, text information, image information, or the like. Exemplarily, the preset screenshot scenario may include: a current page of the preset application including preset information associated with preset media content. The preset information may include comment information. For example, when the user performs a screenshot operation on a comment area of a media content work, and a screenshot picture does not include or only includes an image of a part of original media content, the step of adding target information on the basis of the screenshot picture may include: concatenating image information of the preset media content on the basis of the screenshot picture. Therefore, in some application scenarios, the comment information may cover all or part of the preset media content, and concatenating the image information of the preset media content on the basis of the screenshot picture may facilitate the user viewing the target media content to rapidly know associated preset media content and better understand the meaning of the comment information in the screenshot picture, thereby improving user experience. Optionally, the image information of the preset media content may include, for example, a cover image of the preset media content, or an image within the preset media content displayed at the time instant when the user triggers to display the comment area.

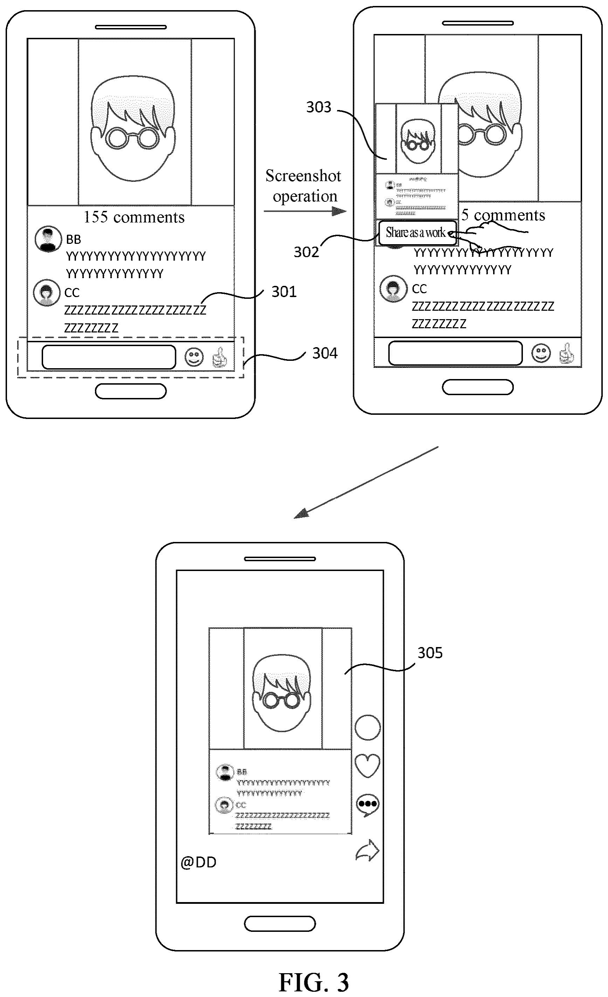

FIG. 3 is a schematic diagram of another interface interaction according to an embodiment of the present disclosure. As shown in FIG. 3, a screenshot operation is received on a media content display page. A current page includes comment information 301 associated with preset media content. After a current preset screenshot scenario is determined, a preset control 302 and an associated image 303 of a screenshot picture are associatively displayed, and the preset control 302 and the associated image 303 are located within the same floating box control. Before displaying the associated image 303, an input area 304 for comment information in the screenshot picture is cropped out. After the user inputs a set trigger operation for the preset control 302, the screenshot picture is scaled down based on a preset proportion to obtain a processing result. Corresponding target media content 305 is generated based on the processing result and is published. As shown in FIG. 3, image content of the screenshot picture included in the target media content 305 avoids set interactive controls and display information at a top, a bottom, and a right side of the media content display page. When the user browsing a work taps a preset view control or preset information in the published target media content 305, the current page may be redirected to a display page of the preset media content and located to an associated comment area.

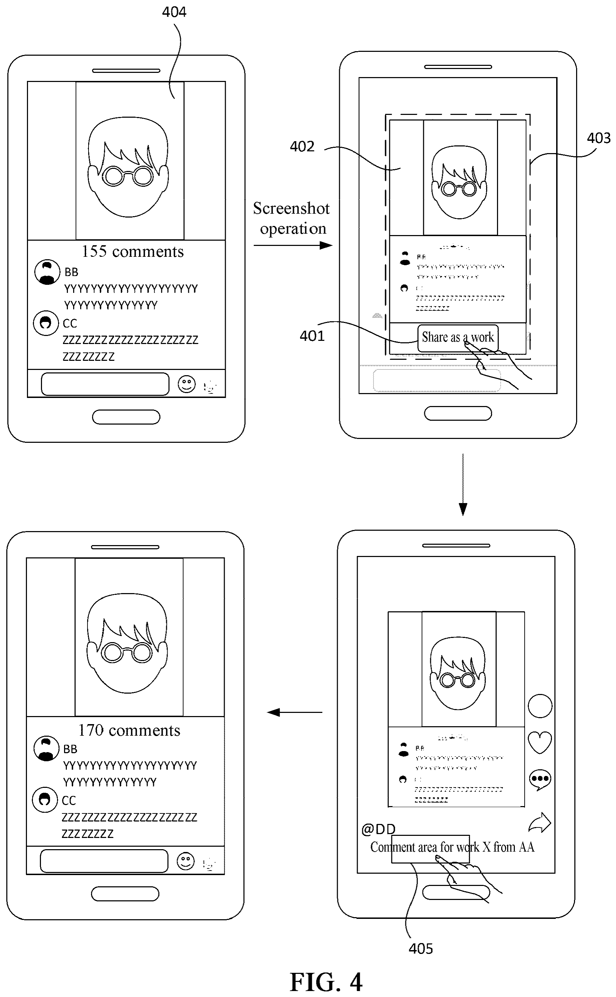

FIG. 4 is a schematic diagram of another interface interaction according to an embodiment of the present disclosure. As shown in FIG. 4, after a screenshot operation is received on a media content display page and a current preset screenshot scenario is determined, a preset control 401 and an associated image 402 of a screenshot picture are associatively displayed. The preset control 401 and the associated image 402 are located within the same subpage 403, and the associated image 402 is preview media content generated based on the screenshot picture. The subpage 403 may be displayed on an upper layer of a current page, and a semi-transparent layer may be added between the subpage 403 and the current page. Before displaying the associated image 402, an input area for comment information in the screenshot picture may be cropped out. The screenshot picture is scaled down based on a preset proportion to obtain the preview media content. After the user inputs a set trigger operation on the preset control 401, corresponding target media content is generated based on the preview media content, and is published. It should be noted that a size of the target media content matches a size of the media content display page of the preset application, while a size of the preview media content is smaller than that of the target media content. When generating the target media content, a background image may be filled around the preview media content to reach the size of the target media content, or the preview media content may be overlaid on the background image of a preset size, with the preview media content centered in the background image, and the preset size being consistent with the size of the target media content.

Optionally, as shown in FIG. 4, an editing operation of the user may also be received on the subpage 403, and after editing is complete, the preset control 401 is triggered.

In some embodiments, the target media content may include a jump link of the preset media content, thereby facilitating the user viewing the target media content to rapidly view the preset media content corresponding to the screenshot picture. The jump link may be displayed as a preset view control. As shown in FIG. 4, after receiving the screenshot operation, the current page of the preset application may include preset media content 404 and comment information associated with the preset media content 404, and after publishing the target media content, the target media content may include a jump link 405 of the preset media content 404. After the user triggers the jump link 405, the current page is redirected to the display of the preset media content 404.

In some embodiments, the step of displaying the preset control may include: displaying a preset control of a first preset style if it is determined that the number of screenshot operations received during a preset time period in the preset screenshot scenario is greater than a preset number threshold; and/or, displaying a preset control of a second preset style if it is determined that the number of the screenshot operations received during the preset time period in the preset screenshot scenario is less than or equal to the preset number threshold, where the second preset style is different from the first preset style. Therefore, preset controls of different styles are displayed based on the times of screenshot operations, thereby facilitating to prompt the user to perform different processing for different screenshot frequencies.

A specific range of the preset time period is not limited, such as a recent preset duration. The preset duration may be a fixed value, such as the last 5 minutes, or a dynamically changing value. Optionally, the preset time period may be included within a display time range of a single media content in the preset application. Therefore, screenshot pictures corresponding to a plurality of screenshot operations may be associated with the same media content, thereby improving the quality of the target media content. For example, the preset duration is a time duration that the currently displayed media content has been played. A value of the preset number threshold is not limited, such as 1 or 2.

Optionally, in response to a trigger operation on the preset control of the first preset style, target media content corresponding to the preset screenshot scenario is generated based on the preset screenshot scenario and a plurality of screenshot pictures corresponding to screenshot operations received during the preset time period.

Optionally, in response to a trigger operation on the preset control of the second preset style, target media content corresponding to the preset screenshot scenario is generated based on the preset screenshot scenario and a screenshot picture corresponding to the most recently received screenshot operation.

In some embodiments, after displaying a preset control of a first preset style, the method may include: acquiring a plurality of screenshot pictures corresponding to respective screenshot operations greater than the preset number threshold; and determining at least one target screenshot based on the plurality of screenshot pictures, where the at least one target screenshot picture is used to generate the target media content. Therefore, the target media content may be generated based on the target screenshot picture in the plurality of screenshots, thereby improving flexibility of the generation of the target media content.

In some embodiments, the step of acquiring a plurality of screenshot pictures corresponding to respective screenshot operations greater than the preset number threshold may include: entering a screenshot selection page in response to a second preset trigger operation on the preset control of the first preset style, and displaying the plurality of screenshot pictures corresponding to the respective screenshot operations greater than the preset number threshold on the screenshot selection page, where the step of determining at least one target screenshot picture based on the plurality of screenshot pictures may include: receiving a selection operation of the user based on the screenshot selection page, and determining the at least one target screenshot picture from the plurality of screenshot pictures based on the selection operation. Therefore, the user may be allowed to freely select the screenshot picture for generating the target media content, thereby improving user experience.

Optionally, a preset control of a third preset style may be displayed on the screenshot selection page, thereby facilitating the user to conveniently trigger the generation or publication of the target media content by triggering the preset control of the third preset style after selecting the target screenshot.

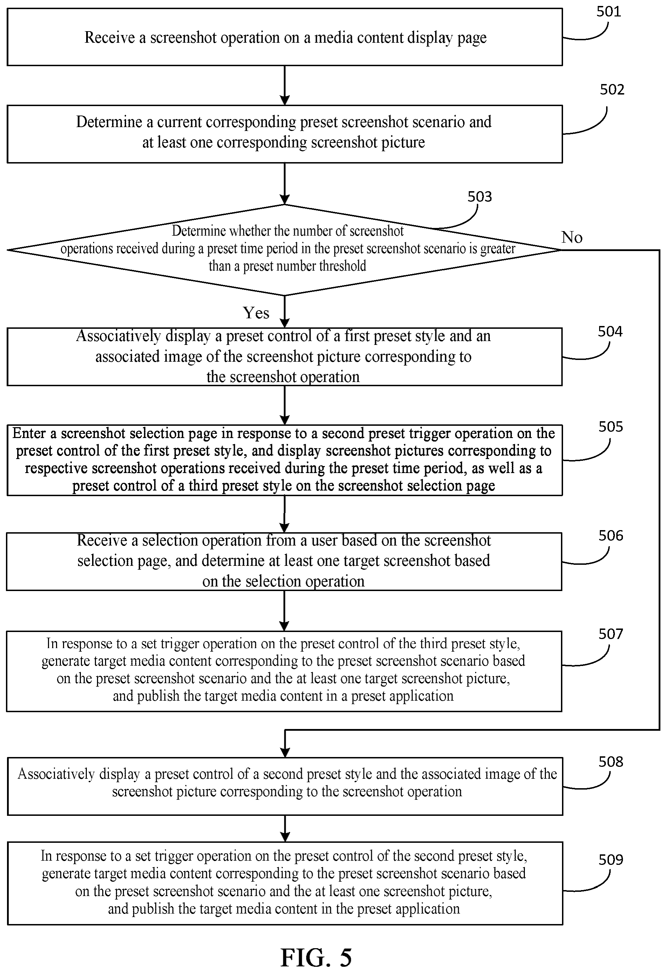

FIG. 5 is a schematic flowchart of an interaction method according to an embodiment of the present disclosure. This embodiment of the present disclosure is optimized based on the various optional solutions in the above embodiment. Specifically, the method includes the following steps:
Step 501: receive a screenshot operation on a media content display page.
Step 502: determine a current corresponding preset screenshot scenario and at least one corresponding screenshot picture.

The preset screenshot scenario may include a current page of a preset application including preset information associated with preset media content, and may also include the current page of the preset application currently displaying the preset media content.

Step 503: determine whether the number of screenshot operations received during a preset time period in the preset screenshot scenario is greater than a preset number threshold, where if yes, perform step 504, and if not, perform step 508.

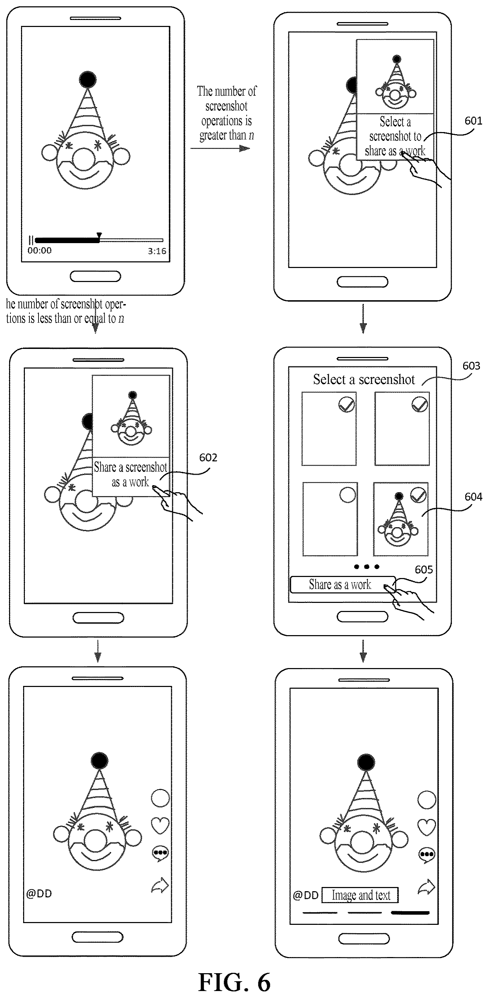

FIG. 6 is a schematic diagram of yet another interface interaction according to an embodiment of the present disclosure. As shown in FIG. 6, assuming that a preset number threshold is *n*, whether the number of screenshot operations received in a process of playing a single preset media content is greater than *n* is determined, where if greater than *n,* a preset control 601 of the first preset style and an associated image of a screenshot picture corresponding to a screenshot operation are associatively displayed, and if less than or equal to *n,* a preset control 602 of the second preset style and an associated image of a screenshot corresponding to a screenshot operation are associatively displayed.

Step 504: associatively display the preset control of the first preset style and the associated image of the screenshot picture corresponding to the screenshot operation.

Exemplarily, an associated image of a screenshot picture corresponding to the most recent screenshot operation may be associatively displayed with the preset control of the first preset style. Before displaying the associated image of the screenshot picture, preset processing may be performed on the screenshot to obtain the associated image. If the screenshot picture includes a comment area, an input area for comment information in the screenshot may be cropped out.

Step 505: enter a screenshot selection page in response to a second preset trigger operation on the preset control of the first preset style, and display screenshot pictures corresponding to respective screenshot operations received during the preset time period, as well as the preset control of the third preset style on the screenshot selection page.

As shown in FIG. 6, if the user taps the preset control 601 of the first preset style, the screenshot selection page 603 may be entered, and the screenshot pictures 604 corresponding to respective the screenshot operations received during the preset time period in the preset screenshot scenario, as well as the preset control 605 of the third preset style are displayed on the screenshot selection page 603.

Step 506: receive a selection operation of the user based on the screenshot selection page, and determine at least one target screenshot picture according to the selection operation.

The at least one target screenshot picture is used to generate the target media content.

As shown in FIG. 6, each screenshot picture 604 displayed on the screenshot selection page 603 may include a checkbox, and the user may select the target screenshot picture in a way of checking the checkbox. Assume the user selects 3 target screenshots.

Step 507: in response to a set trigger operation on the preset control of the third preset style, generate target media content corresponding to the preset screenshot scenario based on the preset screenshot scenario and the at least one target screenshot picture, and publish the target media content in the preset application.

Exemplarily, the target media content may be image-text works or video works. Appropriate audio or user-preset audio may be automatically selected as background music for the target screenshot picture to generate the target media content. If the target screenshot picture includes comment information, the target screenshot picture may be scaled down based on a preset proportion, and the target media content is generated based on a processing result of the preset processing.

As shown in FIG. 6, if the user taps the preset control 605 of the third preset style, an image-text work may be generated and be published.

It should be understood that when the number of the received screenshot operations is greater than *n*, another control used to publish a current single screenshot picture as a work may also be displayed while displaying the preset control 601 of the first preset style, thereby allowing the user to flexibly select the publication of a single picture work or a photo album work.

Step 508: associatively display the preset control of the second preset style and the associated image of the screenshot picture corresponding to the screenshot operation.

Exemplarily, an associated image of a screenshot picture corresponding to the most recent screenshot operation may be associatively displayed with the preset control of the second preset style.

Step 509: in response to a set trigger operation on the preset control of the second preset style, generate target media content corresponding to the preset screenshot scenario based on the preset screenshot scenario and the at least one screenshot, picture and publish the target media content in the preset application.

As show in FIG. 6, if the user taps the preset control 602 of the second preset style, the target media content may be rapidly generated and published based on screenshot pictures corresponding to all screenshot operations received during the preset time period in the preset screenshot scenario. Alternatively, the target media content may be rapidly generated and published based on a screenshot corresponding to the most recent screenshot operation received during the preset time period in the preset screenshot scenario.

According to the interaction method of this embodiment of the present disclosure, a screenshot operation is received on the media content display page. A corresponding preset screenshot scenario and the corresponding at least one screenshot picture are first determined. Then, whether the number of the screenshot operations received during the preset time period in the preset screenshot scenario is greater than the preset number threshold is determined. Different styles of the preset controls triggered by the user to publish the target media content and the associated images of the screenshots are associatively displayed based on a determination result. In a case that the screenshot number is greater than the corresponding threshold, the user is allowed to select a target screenshot picture to generate the media content to be published. Otherwise, the media content may be rapidly generated and be published based on the screenshot picture. Therefore, the flexibility of publishing the media content based on the screenshot picture is improved, and diverse work publishing requirements of the user are satisfied while ensuring work publication convenience.

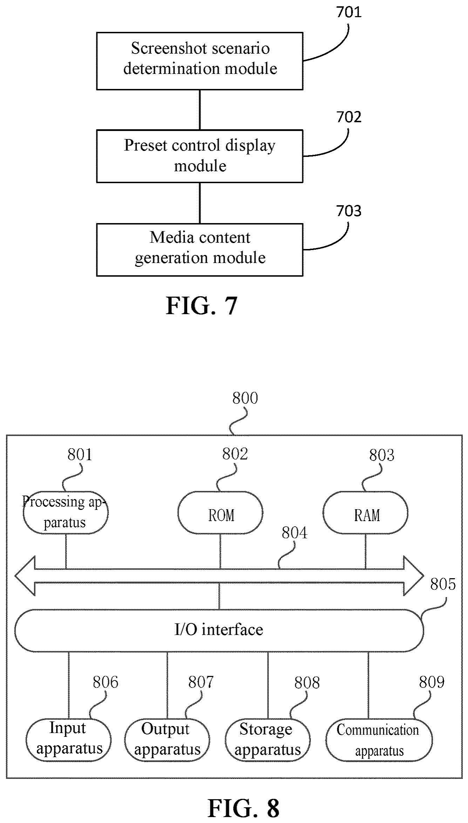

FIG. 7 is a schematic diagram of a structure of an interaction apparatus according to an embodiment of the present disclosure. As shown in FIG. 7, the apparatus includes:
a screenshot scenario determination module 701, configured to determine, in response to receiving a screenshot operation on a media content display page, a current corresponding preset screenshot scenario and at least one corresponding screenshot picture;
a preset control display module 702, configured to display a preset control; and
a media content generation module 703, configured to generate, in response to a trigger operation on the preset control, target media content corresponding to the preset screenshot scenario based on the preset screenshot scenario and the at least one screenshot picture.

According to the technical solution of this embodiment of the present disclosure, in response to receiving a screenshot operation on a media content display page, a corresponding preset screenshot scenario and the at least one corresponding screenshot picture are determined, a preset control is displayed, and in response to the trigger operation on the preset control, target media content corresponding to the preset screenshot scenario is generated based on the preset screenshot scenario and the at least one screenshot picture. By employing the above technical solution, after receiving the screenshot operation on the media content display page, the preset control is displayed; and by triggering the preset control, the target media content corresponding to the preset screenshot scenario may be generated based on the preset screenshot scenario and the at least one screenshot picture. The convenience for the user to generate the media content through screenshot pictures in the preset screenshot scenario is improved, and user experience is enhanced.

Optionally, the preset screenshot scenario may include: the media content display page may include preset information associated with preset media content, and/or the media content display page is currently displaying the preset media content.

Optionally, the preset control display module is specifically configured to: associatively display the preset control and an associated image of the screenshot picture in a situation of determining a current preset screenshot scenario picture.

Optionally, the media content generation module is specifically configured to: generate, in response to the trigger operation on the preset control, target media content corresponding to the preset screenshot scenario based on the associated image of the screenshot picture, and publish the target media content.

Optionally, the media content generation module may include:
an editing page entry unit, configured to enter an editing page in response to the trigger operation on the preset control;
a preview content display unit, configured to display, on the editing page, preview media content generated based on the associated image of the screenshot picture; and
a generation unit, configured to generate, in response to an editing operation on the preview media content, target media content corresponding to the preset screenshot scenario based on the editing operation.

Optionally, the associated image of the screenshot may include: a preview image generated according to the screenshot and the preset screenshot scenario picture.

Optionally, the apparatus further includes:

a first preset processing module, configured to perform first preset processing on the screenshot picture to obtain the associated image of the screenshot before displaying the associated image of the screenshot picture.

Optionally, the media content generation module is configured to perform, in response to a preset trigger operation on the preset control, second preset processing on the at least one screenshot based on the preset screenshot scenario, and generate the target media content corresponding to the preset screenshot scenario according to a processing result of the second preset processing.

Optionally, the first preset processing or the second preset processing includes at least one of the following: cropping out a target area in the screenshot picture; performing scaling down processing on the screenshot picture based on a preset proportion; and adding target information on the basis of the screenshot picture.

Optionally, the preset screenshot scenario includes: the media content display page including preset information associated with preset media content; and the preset information including comment information. Cropping out a target area in the screenshot picture includes: cropping out an input area for the comment information in the screenshot picture.

Optionally, the preset screenshot scenario includes: the media content display page including preset information associated with preset media content; and the preset information including comment information. Adding target information on the basis of the screenshot includes: concatenating image information of the preset media content on the basis of the screenshot picture.

Optionally, the preset control display module is specifically configured to: display a preset control of a first preset style if it is determined that the number of screenshot operations received during a preset time period in the preset screenshot scenario is greater than a preset number threshold; and/or, display a preset control of a second preset style if it is determined that the number of the screenshot operations received during the preset time period in the preset screenshot scenario is less than or equal to the preset number threshold, where the second preset style is different from the first preset style.

Optionally, the apparatus further includes:
a screenshot acquiring module, configured to acquire a plurality of screenshot pictures corresponding to respective screenshot operations greater than the preset number threshold after the displaying a preset control of a first preset style; and
a target screenshot determination module, configured to determine at least one target screenshot picture based on the plurality of screenshot pictures, where the at least one target screenshot picture is used to generate the target media content.

Optionally, the screenshot acquiring module is specifically configured to enter a screenshot selection page in response to a second preset trigger operation on the preset control of the first preset style, where the screenshot selection page is used to display screenshot pictures corresponding to the respective screenshot operations received during a preset time period; and
a target screenshot determination module, configured to receive a selection operation of the user based on the screenshot selection page, and determine at least one target screenshot picture from the plurality of screenshot pictures according to the selection operation.

Optionally, the preset time period is included within a display time range of a single media content in the preset application.

Optionally, the target media content includes a jump link of the preset media content.

The interaction apparatus according to this embodiment of the present disclosure may perform the interaction method according to any embodiment of the present disclosure, and has corresponding functional modules and beneficial effects for performing the method.

It should be noted that the various units and modules included in the above apparatus are only divided according to functional logics, but are not limited to the above division, as long as the corresponding functions can be achieved; and in addition, the specific names of the functional units are only for the convenience of distinguishing each other, and are not used to limit the scope of protection of the embodiments of the present disclosure.

FIG. 8 is a schematic diagram of a structure of an electronic device according to an embodiment of the present disclosure. Referring to FIG. 8 as below, FIG. 8 illustrates a schematic diagram of a structure of an electronic device (e.g., a terminal device or a server in FIG. 8) 800 suitable for implementing an embodiment of the present disclosure. The terminal device in this embodiment of the present disclosure may include, but is not limited to, mobile terminals such as a mobile phone, a notebook computer, a digital broadcast receiver, a personal digital assistant (PDA), a portable Android device (PAD), a portable media player (PMP), and a vehicle terminal (e.g., a vehicle navigation terminal), and fixed terminals such as a digital TV and a desktop computer. The electronic device shown in FIG. 8 is merely an example, and should not impose any limitation on the function and scope of use of the embodiments of the present disclosure.

As shown in FIG. 8, the electronic device 800 may include a processing apparatus (e.g., a central processing unit and a graphics processing unit) 801 that may perform various suitable actions and processing according to a program stored in a read-only memory (ROM) 802 or a program loaded from a storage apparatus 808 into a random access memory (RAM) 803. The RAM 803 further stores various programs and data required for the operation of the electronic device 800. The processing apparatus 801, the ROM 802, and the RAM 803 are connected to one another through a bus 804. An input/output (I/O) interface 805 is also connected to the bus 804.

Typically, the following apparatuses may be connected to the I/O interface 805: an input apparatus 806 including, for example, a touchscreen, a touchpad, a keyboard, a mouse, a camera, a microphone, an accelerometer, and a gyroscope; an output apparatus 807 including, for example, a liquid crystal display (LCD), a speaker, and a vibrator; the storage apparatus 808 including, for example, a magnetic tape and a hard drive; and a communication apparatus 809. The communication apparatus 809 may allow the electronic device 800 to be in wireless or wired communication with another device for data exchange. Although FIG. 8 illustrates the electronic device 800 with various apparatuses, it should be understood that it is not necessary to implement or have all the shown apparatuses. It may be an alternative to implement or have more or fewer apparatuses.

In particular, the above process described with reference to the flowcharts according to the embodiments of the present disclosure may be implemented as a computer software program. For example, an embodiment of the present disclosure includes a computer program product, which includes a computer program carried on a non-transitory computer-readable medium, where the computer program includes program code for performing the method shown in the flowchart. In this embodiment, the computer program may be downloaded and installed from the network through the communication apparatus 809, or installed from the storage apparatus 808, or installed from the ROM 802. The computer program, when executed by the processing apparatus 801, performs the above functions limited in the method according to the embodiments of the present disclosure.

The names of messages or information exchanged between a plurality of apparatuses in the implementations of the present disclosure are used for illustrative purposes only, and are not used to limit the scope of these messages or information.

The electronic device according to this embodiment of the present disclosure and the interaction method according to the above embodiments belong to the same inventive concept. For the technical details not exhaustively described in this embodiment, reference may be made to the above embodiments, and this embodiment and the above embodiments have the same beneficial effects.

An embodiment of the present disclosure provides a computer storage medium, having a computer program stored therein. The program, when executed by a processor, implements the interaction method according to the above embodiments.

It should be noted that the above computer-readable medium in the present disclosure may be either a computer-readable signal medium or a computer-readable storage medium, or any combination of the two. The computer-readable storage medium may be, for example, but is not limited to, electric, magnetic, optical, electromagnetic, infrared, or semiconductor systems, apparatuses, or devices, or any combination of the above. More specific examples of the computer-readable storage medium may include, but are not limited to: an electrical connection with one or more wires, a portable computer disk, a hard drive, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above. In the present disclosure, the computer-readable storage medium may be any tangible medium including or storing a program, and the program may be for use by or for use in combination with an instruction execution system, apparatus, or device. However, in the present disclosure, the computer-readable signal medium may include a data signal propagated in a baseband or as a part of a carrier, where the data signal carries computer-readable program code. The propagated data signal may take various forms, including but not limited to, an electromagnetic signal, an optical signal, or any suitable combination of the above. The computer-readable signal medium may further be any computer-readable medium other than the computer-readable storage medium. The computer-readable signal medium may send, propagate, or transmit a program for use by or for use in combination with the instruction execution system, apparatus, or device. The program code included in the computer-readable medium may be transmitted by any suitable medium, including but not limited to a wire, an optical cable, radio frequency (RF), etc., or any suitable combination of the above.

In some implementations, a client and a server may communicate using any currently known or future-developed network protocols such as a hypertext transfer protocol (HTTP), and may be interconnected with digital data communication in any form or medium (e.g., a communication network). Examples of the communication network include a local area network ("LAN"), a wide area network ("WAN"), an internetwork (e.g., the Internet), a peer-to-peer network (e.g., an ad hoc peer-to-peer network), and any currently known or future-developed network.

The above computer-readable medium may be included in the above electronic device; or may also separately exist without being assembled in the electronic device.

The above computer-readable medium carries one or more programs. The above one or more programs, when executed by the electronic device, cause the electronic device to: determine, in response to receiving a screenshot operation on a media content display page, a current corresponding preset screenshot scenario and at least one corresponding screenshot picture; display a preset control; and generate, in response to a trigger operation on the preset control, target media content corresponding to the preset screenshot scenario based on the preset screenshot scenario and the at least one screenshot picture.

Computer program code for performing operations of the present disclosure may be written in one or more programming languages or a combination thereof, where the above programming languages include, but are not limited to, object-oriented programming languages, such as Java, Smalltalk, and C++, and further include conventional procedural programming languages, such as "C" language or similar programming languages. The program code may be executed entirely on a user computer, partly on the user computer, as a stand-alone software package, partly on the user computer and partly on a remote computer, or entirely on the remote computer or the server. In the case of the remote computer, the remote computer may be connected to the user computer through any kind of network, including a local area network (LAN) or a wide area network (WAN), or may be connected to an external computer (e.g., connected through the Internet with the aid of an Internet service provider).

The flowchart and the block diagram in the accompanying drawings illustrate the possibly implemented system architecture, functions, and operations of the system, the method, and the computer program product according to various embodiments of the present disclosure. In this regard, each block in the flowchart or the block diagram may represent a module, a program segment, or a part of code, and the module, the program segment, or the part of code contains one or more executable instructions for implementing specified logical functions. It should also be noted that in some alternative implementations, the functions marked in the blocks may also occur in an order different from that marked in the accompanying drawings. For example, two blocks shown in succession may actually be performed substantially in parallel, or may sometimes be performed in a reverse order, depending on the functions involved. It should also be noted that each block in the block diagrams and/or the flowcharts, and a combination of the blocks in the block diagrams and/or the flowcharts may be implemented using a dedicated hardware-based system that performs specified functions or operations, or may be implemented using a combination of dedicated hardware and computer instructions.

The involved units described in embodiments of the present disclosure may be implemented through software or hardware. The name of the module does not limit the module itself in certain cases. For example, the screenshot scenario determination module may also be described as a "module for determining, in response to receiving a screenshot operation on a media content display page, a current corresponding preset screenshot scenario and at least one corresponding screenshot picture."

Herein, the functions described above may be performed at least partially by one or more hardware logic components. For example, without limitation, exemplary hardware logic components that can be used include: a field-programmable gate array (FPGA), an application specific integrated circuit (ASIC), an application specific standard product (ASSP), a system on chip (SOC), a complex programmable logic device (CPLD), etc.

In the context of the present disclosure, a machine-readable medium may be a tangible medium that may include or store a program for use by or for use in combination with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the above content. More specific examples of the machine-readable storage medium may include an electrical connection based on one or more wires, a portable computer disk, a hard drive, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above content.

According to one or more embodiments of the present disclosure, an interaction method is provided, and includes:
determining, in response to receiving a screenshot operation on a media content display page, a current corresponding preset screenshot scenario and at least one corresponding screenshot picture;
displaying a preset control; and
generating, in response to a trigger operation on the preset control, target media content corresponding to the preset screenshot scenario based on the preset screenshot scenario and the at least one screenshot picture.

According to one or more embodiments of the present disclosure, the preset screenshot scenario includes: the media content display page including preset information associated with preset media content, and/or the media content display page currently displaying the preset media content.

According to one or more embodiments of the present disclosure, the displaying a preset control includes: associatively displaying the preset control and an associated image of the screenshot picture.

According to one or more embodiments of the present disclosure, generating, in response to a trigger operation on the preset control, target media content corresponding to the preset screenshot scenario based on the preset screenshot scenario and the at least one screenshot picture includes:
generating, in response to the trigger operation on the preset control, target media content corresponding to the preset screenshot scenario based on an associated image of the screenshot picture, and publishing the target media content.

According to one or more embodiments of the present disclosure, generating, in response to a trigger operation on the preset control, target media content corresponding to the preset screenshot scenario based on the preset screenshot scenario and the at least one screenshot picture includes:
entering an editing page in response to the trigger operation on the preset control;
displaying, on the editing page, preview media content generated based on an associated image of the screenshot picture; and
generating, in response to an editing operation on the preview media content, target media content corresponding to the preset screenshot scenario based on the editing operation.

According to one or more embodiments of the present disclosure, the associated image of the screenshot picture includes: a preview image generated based on the screenshot picture and the preset screenshot scenario.

According to one or more embodiments of the present disclosure, before displaying an associated image of the screenshot picture, the method further includes:
performing first preset processing on the screenshot to obtain the associated image of the screenshot picture.

According to one or more embodiments of the present disclosure, generating, in response to a trigger operation on the preset control, target media content corresponding to the preset screenshot scenario based on the preset screenshot scenario and the at least one screenshot picture includes:
performing, in response to a preset trigger operation on the preset control, second preset processing on the at least one screenshot picture based on the preset screenshot scenario, and generating the target media content corresponding to the preset screenshot scenario according to a processing result of the second preset processing.

According to one or more embodiments of the present disclosure, the first preset processing or the second preset processing includes at least one of the following:
cropping out a target area in the screenshot; performing scaling down processing on the screenshot picture based on a preset proportion; and adding target information on the basis of the screenshot picture.

According to one or more embodiments of the present disclosure, the preset screenshot scenario includes: the media content display page including preset information associated with preset media content; and the preset information including comment information,
where cropping out a target area in the screenshot picture includes: cropping out an input area for the comment information in the screenshot picture.

According to one or more embodiments of the present disclosure, the preset screenshot scenario includes: the media content display page including preset information associated with preset media content; and the preset information including comment information,
where adding target information on the basis of the screenshot picture includes: concatenating image information of the preset media content on the basis of the screenshot picture.

According to one or more embodiments of the present disclosure, displaying a preset control includes:
displaying a preset control of a first preset style if it is determined that the number of screenshot operations received during a preset time period in the preset screenshot scenario is greater than a preset number threshold; and/or,
displaying a preset control of a second preset style if it is determined that the number of the screenshot operations received during the preset time period in the preset screenshot scenario is less than or equal to the preset number threshold, where the second preset style is different from the first preset style.

According to one or more embodiments of the present disclosure, after displaying a preset control of a first preset style, the method includes:
acquiring a plurality of screenshot pictures corresponding to respective screenshot operations greater than the preset number threshold; and
determining at least one target screenshot picture based on the plurality of screenshots, where the at least one target screenshot picture is used to generate the target media content.

According to one or more embodiments of the present disclosure, acquiring a plurality of screenshot pictures corresponding to respective screenshot operations greater than the preset number threshold includes:
entering a screenshot selection page in response to a second preset trigger operation on the preset control of the first preset style, and displaying the plurality of screenshot pictures corresponding to the respective screenshot operations greater than the preset number threshold on the screenshot selection page,
where determining at least one target screenshot picture based on the plurality of screenshot pictures includes:
receiving a selection operation of a user based on the screenshot selection page, and determining the at least one target screenshot picture from the plurality of screenshot pictures according to the selection operation.

According to one or more embodiments of the present disclosure, the preset time period is included within a display time range of a single media content in the preset application.

According to one or more embodiments of the present disclosure, the target media content includes a jump link of the preset media content.

According to one or more embodiments of the present disclosure, an interaction apparatus is provided, and includes:
a screenshot scenario determination module, configured to determine, in response to receiving a screenshot operation on a media content display page, a current corresponding preset screenshot scenario and at least one corresponding screenshot picture;
a preset control display module, configured to display a preset control; and
a media content generation module, configured to generate, in response to a trigger operation on the preset control, target media content corresponding to the preset screenshot scenario based on the preset screenshot scenario and the at least one screenshot picture.

According to one or more embodiments of the present disclosure, an electronic device is provided, and includes:
one or more processors; and
a storage apparatus, configured to store one or more programs, where
the one or more programs, when executed by the one or more processors, cause the one or more processors to implement the interaction method according to the embodiments of the present disclosure.

According to one or more embodiments of the present disclosure, a storage medium including computer-executable instructions is provided. The computer-executable instructions, when executed by a computer processor, are used to perform the interaction method according to the embodiments of the present disclosure.

What are described above are only preferred embodiments of the present disclosure and explanations of the technical principles applied. Those skilled in the art should understand that the scope of the disclosure involved in the present disclosure is not limited to the technical solutions formed by specific combinations of the above technical features, and shall also cover other technical solutions formed by any combination of the above technical features or equivalent features thereof without departing from the above concept of disclosure, such as a technical solution formed by replacing the above features with the technical features with similar functions disclosed (but not limited to) in the present disclosure.

Further, although the operations are described in a particular order, it should not be understood as requiring these operations to be performed in the shown particular order or in a sequential order. In certain environments, multitasking and parallel processing may be advantageous. Similarly, although several specific implementation details are included in the above discussion, these specific implementation details should not be interpreted as limitations on the scope of the present disclosure. Some features that are described in the context of separate embodiments may also be implemented in combination in a single embodiment. In contrast, various features described in the context of a single embodiment may also be implemented in a plurality of embodiments individually or in any suitable subcombination.

Although the subject matter has been described in a language specific to structural features and/or logic actions of the method, it should be understood that the subject matter defined in the appended claims is not necessarily limited to the specific features or actions described above. On the contrary, the specific features and the actions described above are merely example forms for implementing the claims.

## Claims

1. An interaction method, comprising:
determining, in response to receiving a screenshot operation on a media content display page, a current corresponding preset screenshot scenario and at least one corresponding screenshot picture;
displaying a preset control; and
generating, in response to a trigger operation on the preset control, target media content corresponding to the preset screenshot scenario based on the preset screenshot scenario and the at least one screenshot picture.

2. The method according to claim 1, wherein the preset screenshot scenario comprises:
the media content display page comprising preset information associated with preset media content, and/or the media content display page currently displaying the preset media content.

3. The method according to claim 1, wherein displaying the preset control comprises:
associatively displaying the preset control and an associated image of the screenshot picture.

4. The method according to claim 1 or 3, wherein generating, in response to the trigger operation on the preset control, the target media content corresponding to the preset screenshot scenario based on the preset screenshot scenario and the at least one screenshot picture comprises:
generating, in response to the trigger operation on the preset control, target media content corresponding to the preset screenshot scenario based on an associated image of the screenshot picture, and publishing the target media content.

5. The method according to claim 1, wherein generating, in response to the trigger operation on the preset control, target media content corresponding to the preset screenshot scenario based on the preset screenshot scenario and the at least one screenshot picture comprises:
entering an editing page in response to the trigger operation on the preset control;
displaying, on the editing page, preview media content generated based on an associated image of the screenshot picture; and
generating, in response to an editing operation on the preview media content, target media content corresponding to the preset screenshot scenario based on the editing operation.

6. The method according to claim 3 or 5, wherein the associated image of the screenshot picture comprises: a preview image generated based on the screenshot picture and the preset screenshot scenario.

7. The method according to claim 3 or 5, wherein before displaying the associated image of the screenshot picture, the method further comprises:
performing first preset processing on the screenshot picture to obtain the associated image of the screenshot picture.

8. The method according to claim 1, wherein generating, in response to the trigger operation on the preset control, the target media content corresponding to the preset screenshot scenario based on the preset screenshot scenario and the at least one screenshot picture comprises:
performing, in response to a preset trigger operation on the preset control, second preset processing on the at least one screenshot picture based on the preset screenshot scenario, and generating the target media content corresponding to the preset screenshot scenario according to a processing result of the second preset processing.

9. The method according to claim 7 or 8, wherein the first preset processing or the second preset processing comprises at least one of the following:
cropping out a target area in the screenshot picture;
performing scaling down processing on the screenshot picture based on a preset proportion; and
adding target information on the basis of the screenshot picture.

10. The method according to claim 9, wherein the preset screenshot scenario comprises: the media content display page comprising preset information associated with preset media content; and the preset information comprising comment information,
wherein cropping out the target area in the screenshot picture comprises: cropping out an input area for the comment information in the screenshot picture.

11. The method according to claim 9, wherein the preset screenshot scenario comprises: the media content display page comprising preset information associated with preset media content; and the preset information comprising comment information,
wherein adding the target information on the basis of the screenshot comprises: concatenating image information of the preset media content on the basis of the screenshot picture.

12. The method according to claim 1, wherein displaying the preset control comprises:
displaying a preset control of a first preset style in response to a determination that a number of screenshot operations received during a preset time period in the preset screenshot scenario is greater than a preset number threshold; and/or,
displaying a preset control of a second preset style in response to a determination that the number of the screenshot operations received during the preset time period in the preset screenshot scenario is less than or equal to the preset number threshold, wherein the second preset style is different from the first preset style.

13. The method according to claim 12, wherein after displaying the preset control of the first preset style, the method comprises:
acquiring a plurality of screenshot pictures corresponding to respective screenshot operations greater than the preset number threshold; and
determining at least one target screenshot picture based on the plurality of screenshot pictures, wherein the at least one target screenshot picture is used to generate the target media content.

14. The method according to claim 13, wherein acquiring the plurality of screenshots corresponding to the respective screenshot operations greater than the preset frequency threshold comprises:
entering a screenshot selection page in response to a second preset trigger operation on the preset control of the first preset style, and displaying the plurality of screenshot pictures corresponding to the respective screenshot operations greater than the preset frequency threshold on the screenshot selection page,
wherein determining the at least one target screenshot picture based on the plurality of screenshot pictures comprises:
receiving a selection operation from a user based on the screenshot selection page, and determining the at least one target screenshot picture from the plurality of screenshot pictures according to the selection operation.

15. The method according to claim 14, wherein the preset time period is included within a display time range of a single media content in the preset application.

16. The method according to claim 1, wherein the target media content comprises a jump link of the preset media content.

17. An interaction apparatus, comprising:
a screenshot scenario determination module, configured to determine, in response to receiving a screenshot operation on a media content display page, a current corresponding preset screenshot scenario and at least one corresponding screenshot picture;
a preset control display module, configured to display a preset control; and
a media content generation module, configured to generate, in response to a trigger operation on the preset control, target media content corresponding to the preset screenshot scenario based on the preset screenshot scenario and the at least one screenshot picture.

18. The apparatus according to claim 17, further comprising: a module configured to perform the method according to any of claims 2 to 16.

19. An electronic device, wherein the electronic device comprises:
one or more processors; and
a storage apparatus, configured to store one or more programs, wherein
the one or more programs, when executed by the one or more processors, cause the one or more processors to implement the interaction method according to any of claims 1 to 16.

20. A storage medium comprising computer-executable instructions, wherein the computer-executable instructions, when executed by a computer processor, are used to perform the interaction method according to any of claims 1 to 16.
